# EUROPÄISCHE PATENTANMELDUNG

(11) **EP 3 771 706 A1**
(43) Veröffentlichungstag der Anmeldung: **03.02.2021**
(21) Anmeldenummer: 20178914.6
(22) Anmeldetag: 09.06.2020
(51) Int. Cl.: C05G 5/30, C09D 5/00, C09D 191/00, A01B 76/00, A01C 15/00, A01N 25/26, C05G 5/40

(54) **BESCHICHTUNGSMITTEL ZUR BESCHICHTUNG EINES BAUTEILS EINER LAND- ODER GARTENMASCHINE SOWIE DESSEN VERWENDUNG DAZU, BESCHICHTETES BAUTEIL, LAND- ODER GARTENMASCHINE DAMIT, SOWIE VERFAHREN ZUR HERSTELLUNG EINES SOLCHEN BAUTEILS**

(30) Priorität: 02.08.2019 DE 102019121017
(71) Anmelder: Frank Walz- und Schmiedetechnik GmbH, 35116 Hatzfeld/Eder (DE)
(72) Erfinder: Grote, Frank, 35037 Marburg (DE); Zimmermann, Stefan, 35037 Marburg (DE)
(74) Vertreter: Paul & Albrecht Patentanwälte PartG mbB

(57) **Zusammenfassung**

Die Erfindung betrifft ein Bauteil 1 für die Montage an einer Land- und/oder Gartenmaschine 3, insbesondere Werkzeug oder Komponente einer Werkzeuganordnung zur Bodenbearbeitung und/oder Grünlandbearbeitung und/oder Ernte und/oder Gartengestaltung, wobei die Oberfläche des Bauteils 1 zumindest abschnittsweise mit einer Beschichtung 8 versehen ist, wobei die Beschichtung 8 zumindest eine Schicht aus einem insbesondere kunststofffreien Beschichtungsmittel aufweist, das ein Düngemittel und/oder einen Bodenhilfsstoff und/oder einen Bodenverbesserungsstoff umfasst. Darüber hinaus betrifft die Erfindung eine Land- und/oder Gartenmaschine 3 mit einem solchen Bauteil 1. Außerdem betrifft die Erfindung ein Beschichtungsmittel. Des Weiteren betrifft die Erfindung eine Verwendung eines solchen Beschichtungsmittels zur Beschichtung eines solchen Bauteils 1. Schließlich betrifft die Erfindung ein Verfahren zur Herstellung eines solchen Bauteils 1.

## Beschreibung

Die Erfindung betrifft ein Bauteil für die Montage an einer Land- und/oder Gartenmaschine, insbesondere Werkzeug oder Komponente einer Werkzeuganordnung zur Bodenbearbeitung und/oder Grünlandbearbeitung und/oder Ernte und/oder Gartengestaltung, wobei die Oberfläche des Bauteils zumindest abschnittsweise mit einer Beschichtung versehen ist. Darüber hinaus betrifft die Erfindung eine Land- und/oder Gartenmaschine mit einem solchen Bauteil. Außerdem betrifft die Erfindung ein Beschichtungsmittel. Des Weiteren betrifft die Erfindung eine Verwendung eines solchen Beschichtungsmittels zur Beschichtung eines solchen Bauteils. Schließlich betrifft die Erfindung ein Verfahren zur Herstellung eines solchen Bauteils.

Im landwirtschaftlichen sowie im Grünland- und Ernte-Bereich, aber auch im Garten-Bereich, kommen Land- und/oder Gartenmaschinen zum Einsatz, die insbesondere der Bearbeitung des Bodens, von Grünland- oder Ernte-Gütern dienen. Als Beispiele für Landmaschinen seien Pflüge, Grubber, Eggen, Fräsen, Mähdrescher, Mähmaschinen, Häcksler, Mulcher sowie Ernte-, Dünge- und Sämaschinen genannt. Ein Beispiel für eine Gartenmaschine ist ein Vertikutierer.

Land- und/oder Gartenmaschinen tragen in der Regel eine Mehrzahl von Bauteilen, die unmittelbar mit dem zu bearbeitenden Boden und/oder Grünland- und/oder Ernte-Gut in Kontakt kommen. Bei den Bauteilen handelt es sich insbesondere um Werkzeuge bzw. Komponenten von Werkzeuganordnungen, die beispielsweise durch Schare oder Scharspitzen, Grubber, Zinken, Heber, insbesondere Ährenheber, Scheiben oder Schneiden, insbesondere für ein Mähwerk oder einen Häcksler, oder Gleitkufen gegeben sein können. Ein Beispiel für ein Werkzeug einer Gartenmaschine ist das Messer eines Vertikutierers.

Die Oberfläche solcher Bauteile ist häufig zumindest abschnittsweise mit einer Beschichtung versehen, die vorrangig dazu dient, das sich darunter befindliche Bauteil vor schädlichen Umwelteinflüssen zu schützen. Heutzutage werden nur wenige Werkzeuge zur Bodenbearbeitung und/oder Grünlandbearbeitung und/oder Ernte und/oder Gartengestaltung aus rostfreiem Stahl hergestellt. Der Großteil dieser Werkzeuge wird aus niedrig legierten Stählen gefertigt und anschließend beispielsweise mittels eines Tauchlack-, Pulverlack- oder kathodischen Tauchlackierungs- ("KTL") Verfahrens lackiert/beschichtet, um einen Korrosionsschutz zu erzielen. Die hierbei verwendeten Lacke umfassen in der Regel Petrochemie-Komponenten, beinhalten also Kunststoffe, insbesondere Kunstharze, wie etwa Polyurethane, Polyester- und/oder Epoxidharze, in Bindemitteln und/oder in Pigmenten. Die Begriffe Kunststoff und Plastik können als Synonym verwendet werden. Falls die Beschichtung Farbpigmente enthält, hat diese den zusätzlichen Nutzen, dass sie dem beschichteten Bauteil ein attraktives Erscheinungsbild verleiht.

Ausgehend von diesem Stand der Technik ist es daher eine Aufgabe der vorliegenden Erfindung, ein Bauteil für die Montage an einer Land- und/oder Gartenmaschine der bekannten Art bereitzustellen, das mit einer Beschichtung versehen ist, die einen möglichst vielfältigen Nutzen bietet.

Diese Aufgabe wird bei einem Bauteil der eingangs genannten Art dadurch gelöst, dass die Beschichtung zumindest eine Schicht aus einem insbesondere kunststofffreien Beschichtungsmittel aufweist, das ein Düngemittel und/oder einen Bodenhilfsstoff und/oder einen Bodenverbesserungsstoff umfasst.

Der Grundgedanke der vorliegenden Erfindung besteht mit anderen Worten darin, ein Bauteil, insbesondere Werkzeug oder Komponente einer Werkzeuganordnung zur Bodenbearbeitung und/oder Grünlandbearbeitung und/oder Ernte und/oder Gartengestaltung bereitzustellen, das mit einer Beschichtung versehen ist, die bodenverbessernde Eigenschaften besitzt. Genauer gesagt wird beim Abrieb der Beschichtung während des bestimmungsgemäßen Einsatzes des Bauteils das/der in der Beschichtung enthaltene Düngemittel und/oder Bodenhilfsstoff und/oder Bodenverbesserungsstoff in den Boden eingebracht, wo das Düngemittel und/oder der Bodenhilfsstoff und/oder der Bodenverbesserungsstoff ihre positive Wirkung auf den Boden entfalten können. Auf diese Weise kann der Boden regeneriert werden, was förderlich für das Pflanzenwachstum auf dem Boden ist. Außerdem können sich durch die Beimengung eines Düngemittels und/oder Bodenhilfsstoffs und/oder Bodenverbesserungsstoffs die folgenden positiven Wirkungen ergeben: gesteigerter Ertrag, erhöhte Fruchtbarkeit des Bodens, beschleunigte Bodenbildung, Humusbildung, Bodenlockerung, Hemmung von Fäulnisprozessen, verbesserter Schutz von Pflanzen vor Krankheiten und/oder Schadinsekten, erhöhte Schmiegsamkeit und/oder Festigkeit von Pflanzen, Bereitstellung von Nährstoffen und/oder Spurenelementen für Pflanzen und/oder aktive CO²-Entfernung.

Bei dem Beschichtungsmittel handelt es sich insbesondere um einen Lack, eine Farbe oder eine Lasur. Das Beschichtungsmittel und somit die zumindest eine Schicht aus dem Beschichtungsmittel können kunststofffrei sein.

Bevorzugt ist die ganze Beschichtung kunststofffrei. Der Begriff "kunststofffrei" schließt nicht aus, dass in dem Beschichtungsmittel, in der zumindest einen Schicht aus dem Beschichtungsmittel oder in der Beschichtung Kunststoffverunreinigungen in üblichen Mengen enthalten sind. Da die Beschichtung eines Bauteils während dessen Einsatz bei einer Bodenbearbeitung und/oder Grünlandbearbeitung und/oder Ernte und/oder Gartengestaltung abgetragen oder abgerieben und auf diese Weise in die Erde eingebracht wird, bietet eine kunststofffreie Beschichtung gegenüber vorbekannten kunststoffhaltigen Beschichtungen den Vorteil, dass mit dem Abtrag oder Abrieb der kunststofffreien Beschichtung kein Plastik, insbesondere Mikro- oder Nanoplastik, in die Erde eingebracht wird. Somit wird eine Kontaminierung des Erdbodens mit Kunststoffpartikeln verhindert. Demgegenüber wird bei zweckmäßiger Verwendung eines vorbekannten Bauteils mit kunststoffhaltiger Beschichtung Plastik auf einen Acker, ein Feld, ein Beet oder generell in den Erdboden ausgebracht und darin verteilt. Die direkt eingetragene Kunststoffmenge ist zwar gering, allerdings summiert sich der Kunststoff-Eintrag über die Jahre oder Jahrzehnte, was unkalkulierbare Auswirkungen auf Mikroorganismen und Pflanzen und letztlich auf die Menschheit hat. Wie beispielsweise in dem Artikel "Mikroplastik im Boden - Die Verunreinigung ist noch nicht auskartiert" von Matthias Rilling, der unter der Internetadresse https://www.deutschlandfunk.de/mikroplastik-im-boden-die-verunreinigung-auf-den.676.de.html?dram:articleid=410228 abrufbar ist, vermutet, wird Plastik im Erdboden in Nanopartikel zersetzt, die von Pflanzen aufgenommen werden und letztendlich auf dem Teller der Menschen landen. Darüber hinaus wird von Sarah Piehl, Anna Leibner, Martin G. J. Löder, Rachid Dris, Christina Bogner und Christian Laforsch in dem Aufsatz "Identification and quantification of macro- and microplastics on an agricultural farmland", Nature, Scientific Reports 8, Artikelnummer: 17950 (2018) beschrieben, dass Plastikrückstände negative Einflüsse auf die Pflanzenansiedlung, das Wurzelwachstum und die Versalzung haben. Außerdem stehen Plastikrückstände im Verdacht, auch den Feuchtigkeits- und Nährstoff-Transport im Boden zu beeinflussen.

Gemäß einer Ausgestaltung der Erfindung umfasst das Düngemittel und/oder der Bodenhilfsstoff und/oder der Bodenverbesserungsstoff ein Mehl zumindest einer Gesteinsart, wobei es sich bei der Gesteinsart insbesondere um Basalt, Diabas, Quarz, Zeolith, Granit, Bentonit und/oder vulkanisches oder magmatisches Gestein handelt. Es gilt insbesondere, dass der Bodenhilfsstoff und/oder der Bodenverbesserungsstoff ein Mehl zumindest einer Gesteinsart umfasst, wobei es sich bei der Gesteinsart insbesondere um Basalt, Diabas, Quarz, Zeolith, Granit, Bentonit und/oder vulkanisches oder magmatisches Gestein handelt. Als Beispiel für vulkanisches oder magmatisches Gestein ist Lava zu nennen. Magmatisches Gestein kann beispielsweise als Gestein, das durch Erkalten und Auskristallisieren von geschmolzenem Material aus dem Erdinneren entsteht, definiert werden. Basalt erhöht unter anderem die Fruchtbarkeit, lockert den Boden, wirkt hemmend auf Fäulnisvorgänge in der Erde, liefert viele wichtige Spurenelemente in natürlicher Form, schützt vor Erosion und bindest CO² aus der Luft im Feld.

Bei dem Düngemittel kann es sich um ein Düngemittel gemäß dem deutschen Düngegesetz, kurz DüngeG, insbesondere gemäß der Definition in § 2 Nr. 1 DüngeG handeln, beispielsweise um Stoffe, ausgenommen Kohlendioxid und Wasser, die dazu bestimmt sind, Nutzpflanzen Nährstoffe zuzuführen, um ihr Wachstum zu fördern, ihren Ertrag zu erhöhen oder ihre Qualität zu verbessern, oder die Bodenfruchtbarkeit zu erhalten oder zu verbessern. Bei dem Düngemittel kann es sich auch um ein Düngemittel gemäß dem österreichischen Düngemittelgesetz, kurz DMG, insbesondere gemäß der Definition in § 1 DMG handeln, beispielsweise um Stoffe, die Pflanzennährstoffe enthalten und dazu bestimmt sind, unmittelbar oder mittelbar Pflanzen zugeführt zu werden, um deren Wachstum zu fördern, deren Qualität zu verbessern oder deren Ertrag zu erhöhen. Die Begriffe Düngemittel und Dünger können als Synonyme verwendet werden. Ebenso können die Begriffe Bodenverbesserungsstoff und Bodenverbesserungsmittel als Synonyme verwendet werden.

Ebenso kann es sich bei dem Düngemittel und/oder dem Bodenverbesserungsstoff um einen Dünger und/oder ein Bodenverbesserungsmittel gemäß der Definition der schweizerischen Düngerverordnung, kurz DüV oder gemäß der Definition der schweizerischen Verordnung des WBF über das Inverkehrbringen von Düngern handeln. Das Düngemittel kann einen mineralischen Dünger umfassen. Mineralische Dünger sind insbesondere Erzeugnisse deren Nährstoffe durch Extraktion oder durch industrielle, physikalische und/oder chemische Verfahren gewonnen wurden oder in Form von Mineralien erhalten sind, sowie Kalkstickstoff, Cyanamid, Harnstoff und seine Kondensate und Anlagerungsverbindungen.

Der mineralische Dünger kann ein mineralischer Einnährstoffdünger sein, bei dem es sich beispielsweise um einen Dünger handeln kann, der nur einen Makronährstoff enthält und davon mindestens 3 Prozent, oder der nur einen Makronährstoff enthält und davon mindestens 3 Prozent, wobei das Element vorzugsweise in Verbindung mit Kalium, Magnesium oder Schwefel als Begleition vorliegt.

Der mineralische Dünger kann ferner ein mineralischer Mehrnährstoffdünger sein, bei dem es sich beispielsweise um einen Dünger handeln kann, der insgesamt mindestens 3 Prozent von zwei oder drei Primärnährstoffen enthält, oder der einen Primärnährstoff enthält und wobei Calcium, Magnesium, Schwefel oder Natrium nicht nur als Begleition (insgesamt mindestens 3 Prozent dieser Elemente) vorliegt.

Darüber hinaus kann das Düngemittel einen organischen Dünger umfassen. Hierbei kann es sich um ein Erzeugnis handeln, das hauptsächlich aus kohlenstoffhaltigem Material pflanzlichen, tierischen oder mikrobiellen Ursprungs besteht, mindestens 10 Prozent organische Substanzen sowie folgende Stoffe enthält: insgesamt mindestens 3 Prozent Makronährstoffe, oder insgesamt mindestens 0,005 Prozent von zwei oder mehreren Spurennährstoffen oder mindestens 0,01 Prozent von einem dieser Spurennährstoffe. Außerdem kann das Düngemittel einen organisch-mineralischen Dünger umfassen, bei dem es sich um eine Mischung von organischen Düngern mit Mineraldünger und/oder mineralischen Bodenverbesserungsmitteln, d.h. Erzeugnissen, welche die Eigenschaften des Bodens verbessern, handeln kann, die mindestens 10 Prozent organische Substanz sowie folgende Stoffe enthält: insgesamt mindestens 3 Prozent Makronährstoffe, oder insgesamt mindestens 0,005 Prozent von zwei oder mehreren Spurennährstoffen oder mindestens 0,01 Prozent von einem dieser Spurennährstoffe. Als Primärnährstoffe gelten insbesondere die Elemente Stickstoff, Phosphor und Kalium. Als Makronährstoffe gelten insbesondere die Elemente Stickstoff, Phosphor, Kalium, Calcium, Magnesium, Natrium und Schwefel. Als Spurennährstoffe gelten insbesondere die Elemente Bor, Kobalt, Kupfer, Eisen, Mangan, Molybdän und Zink, die in geringen Mengen für das Pflanzenwachstum essentiell sind. Konkrete Beispiele für mineralische Einnährstoffdünger, mineralische Mehrnährstoffdünger, organische Dünger und organisch-mineralische Dünger sowie für weitere Komponenten, die für eine Verwendung in einer erfindungsgemäßen Beschichtung beziehungsweise einem erfindungsgemäßen Beschichtungsmittel in Frage kommen, sind in der Düngerliste der schweizerischen Verordnung des WBF über das Inverkehrbringen von Düngern aufgelistet. Ebenso sind Beispiele für Bodenverbesserungsmittel, die für eine Verwendung in einer erfindungsgemäßen Beschichtung beziehungsweise einem erfindungsgemäßen Beschichtungsmittel in Frage kommen, in der Düngerliste der schweizerischen Verordnung des WBF über das Inverkehrbringen von Düngern aufgelistet. Selbstverständlich können auch andere Komponenten in Frage kommen, die nicht in der Düngerliste aufgeführt sind.

Außerdem kann es sich bei dem Düngemittel und/oder dem Bodenhilfsstoff und/oder dem Bodenverbesserungsstoff um ein Düngemittel und/oder einen Bodenhilfsstoff und/oder einen Bodenverbesserungsstoff gemäß der Definition in der Betriebsmittelliste des Forschungsinstituts für biologischen Landbau, kurz FiBL, handeln.

Bei dem Bodenhilfsstoff kann es sich um einen Bodenhilfsstoff gemäß dem deutschen Düngegesetz, insbesondere gemäß der Definition in § 2 Nr. 6 des deutschen Düngegesetzes handeln, beispielsweise um Stoffe ohne wesentlichen Nährstoffgehalt sowie Mikroorganismen, die dazu bestimmt sind, die biologischen, chemischen oder physikalischen Eigenschaften des Bodens zu beeinflussen, um die Wachstumsbedingungen für Nutzpflanzen zu verbessern oder die symbiotische Bindung von Stickstoff zu fördern. Der Bodenhilfsstoff ist insbesondere ein Bodenhilfsstoff gemäß dem österreichischen Düngemittelgesetz, vorzugsweise gemäß der Definition in § 2 Abs. 1 DMG. Beispielsweise handelt es sich um Stoffe ohne wesentlichen Gehalt an pflanzenaufnehmbaren Nährstoffen, die den Boden biotisch, chemisch oder physikalisch beeinflussen, um seinen Zustand oder die Wirksamkeit von Düngemitteln zu verbessern, insbesondere Bodenimpfmittel, Bodenkrümler, Bodenstabilisatoren, Gesteinsmehl, Nitrifikationshemmer, Torf, Rinden und Rindenprodukte.

Es gilt insbesondere, dass unter Düngemitteln keine Pflanzenstärkungsmittel zu verstehen sind. Pflanzenstärkungsmittels sind dabei solche im Sinne von § 2 Nr. 10 Pflanzenschutzgesetz (PfISchG), also Stoffe und Gemische einschließlich Mikroorganismen, die ausschließlich dazu bestimmt sind, allgemein der Gesunderhaltung der Pflanzen zu dienen, soweit sie nicht Pflanzenschutzmittel nach Artikel 2 Absatz 1 der Verordnung (EG) Nr. 1107/2009, oder dazu bestimmt sind, Pflanzen vor nichtparasitären Beeinträchtigungen zu schützen. Insbesondere gilt, dass beispielsweise Kaliumsilikat und Natriumsilikat keine Düngemittel sind.

Gemäß einer Ausführungsform der Erfindung beträgt der Gesamtgehalt an Düngemittel und/oder Bodenhilfsstoff und/oder Bodenverbesserungsstoff bezogen auf die Gesamtmenge des Beschichtungsmittels der zumindest einen Schicht maximal 80 Gew.%, bevorzugt maximal 70 Gew.%, besonders bevorzugt maximal 60 Gew.%, insbesondere maximal 10 Gew.%. Der Gesamtgehalt an Düngemittel und/oder Bodenhilfsstoff und/oder Bodenverbesserungsstoff bezogen auf die Gesamtmenge des Beschichtungsmittels der zumindest einen Schicht liegt insbesondere zwischen 5 und 50 Gew.%, bevorzugt zwischen 10 und 40 Gew.%, besonders bevorzugt zwischen 10 und 30 Gew.%. Versuche haben gezeigt, dass sich je nach genauer Zusammensetzung des Beschichtungsmittels bei einem Gesamtgehalt zwischen 10 und 40 Gew.% beziehungsweise zwischen 10 und 30 Gew.% ein optimaler Bodenverbesserungseintrag bei gleichzeitig ausreichender Haftfestigkeit des Beschichtungsmittels einstellt. Eine bestmögliche Haftfestigkeit des Beschichtungsmittels ergibt sich für einen Gesamtgehalt zwischen 0 und 10 Gew.%.

Ferner beträgt der Gesamtgehalt an Düngemittel und/oder Bodenhilfsstoff und/oder Bodenverbesserungsstoff bezogen auf die Gesamtmenge des Beschichtungsmittels der zumindest einen Schicht bei einer Ausführungsform der Erfindung mindestens 5 Gew.%, bevorzugt mindestens 8 Gew.%, vorzugsweise mindestens 10 Gew.%, besonders bevorzugt mindestens 20 Gew.%, insbesondere mindestens 30 Gew.%, mindestens 40 Gew.% oder mindestens 50 Gew.% beträgt. Ab einer bestimmten Schichtdicke kann es dazu kommen, dass Schichten nahe der Oberfläche des Bauteils verglichen mit weiter außen liegenden Schichten nur noch langsam aushärten, was unter anderem auf eine mangelnde Sauerstoffzufuhr zurückzuführen ist.

Gemäß einer bevorzugten Ausgestaltung ist das Beschichtungsmittel ein Beschichtungsmittel auf Ölbasis, vorzugsweise Leinölbasis. Das Beschichtungsmittel umfasst insbesondere reines Leinöl und/oder gekochtes Leinöl und/oder rohes Leinöl und/oder kaltgepresstes Leinöl und/oder geklärtes Leinöl und/oder entschleimtes Leinöl und/oder sterilisiertes Leinöl und/oder Leinölfirnis und/oder einen Öllack, vorzugsweise Tonkinlack, auch als Schiffslack bekannt. Beispielsweise kann das Beschichtungsmittel kaltgepresstes, geklärtes, gekochtes Leinöl, das vorzugsweise bei über 100°C voroxidiert, und/oder kaltgepresstes, geklärtes, rohes Leinöl umfassen. Leinöl kann unter anderem die Funktion eines Bindemittels übernehmen. Weitere Vorteile eines Beschichtungsmittels auf Leinölbasis sind, dass diesem problemlos eine pulverförmige Komponente zugesetzt werden kann und dass sich dieses problemlos auf Stahl aufbringen lässt. Das Bauteil besteht vorzugsweise aus Metall oder einer Metalllegierung, vorzugsweise Stahl. Der Ausdruck "aus Metall oder einer Metalllegierung bestehen" kann auch bedeuten, dass das Bauteil zumindest im Wesentlichen aus Metall oder einer Metalllegierung besteht, d.h. es ist nicht ausgeschlossen, dass einzelne Komponenten oder Abschnitte des Bauteils nicht aus Metall oder einer Metalllegierung bestehen, also beispielsweise aus Kunststoff bestehen. Darüber hinaus schützt eine ölhaltige, insbesondere leinölhaltige, Beschichtung zumindest temporär gegen Korrosion, also Rost.

Die Schichtdicke einer Schicht der Beschichtung, insbesondere jeder Schicht der Beschichtung, beträgt in bevorzugter Ausgestaltung mindestens 20 µm, insbesondere mindestens 25 µm. Die Schichtdicke einer Schicht der Beschichtung, insbesondere jeder Schicht der Beschichtung, kann mindestens 30 µm, bevorzugt mindestens 50 µm, besonders bevorzugt mindestens 60 µm betragen, insbesondere zwischen 60 µm und 100 µm liegen, vorzugsweise 60 µm, 80 µm oder 100 µm betragen. Bevorzugt weist die zumindest eine Schicht aus dem Beschichtungsmittel, das ein Düngemittel und/oder einen Bodenhilfsstoff und/oder einen Bodenverbesserungsstoff umfasst, eine der vorgenannten Schichtdicken auf.

Vorteilhafterweise umfasst das Beschichtungsmittel als weiteren Bestandteil Korrosionsschutzmittel, bevorzugt Eisenglimmer (auch unter dem Namen Hämatit bekannt) und/oder Eisenmennige und/oder Graphit, und/oder Dispergiermittel und/oder Verdünnungsmittel und/oder einen Trockenstoff und/oder Bindemittel und/oder Farbpigmente und/oder einen Füllstoff oder Additive.

Die Bindemittel können zusätzlich zu Leinöl, das ja bereits eine bindende Wirkung aufweist, eingesetzt werden. Es können beispielsweise Bindemittel verwendet werden, die oxidativ trocknende chemische Gruppierungen umfassen. Die Bindemittel können pflanzliche Öle und/oder Harze umfassen, die Fettsäuren mit Doppelbindungen aufweisen, wie etwa Sojaöl oder Ricinusöl.

Es kann ein flüssiger Trockenstoff und/oder ein fester, insbesondere pulverförmiger Trockenstoff eingesetzt werden. Es kann ein Trockenstoff der in der EP 0549865 A1 beschriebenen Art verwendet werden. Der Trockenstoff kann organometallisch aufgebaut sein, insbesondere mit einer Kobalt, Blei, Mangan, Eisen, Cer, Zirconium, Calcium, Barium und/oder Zink-Metallkomponente. Der Trockenstoff kann insbesondere Metallsalze, wie etwa Mangan- und/oder Zirkonkomplexe, aufweisen. Der Trockenstoff kann auch aus 2-Ethylhexansäure und einem Metall bzw. Metallgemisch aufgebaut sein. Eine gelöste, flüssige Form eines Trockenstoffs bezeichnet man auch als Sikkativ. Mittels Sikkativen lässt sich ein Aushärteprozess steuern.

Das Beschichtungsmittel kann beispielsweise einen Anteil von maximal 4 %, insbesondere von 0,1 bis 4 %, bevorzugt von 0,2 bis 2 % Trockenstoffe bezogen auf das Gesamtgewicht des Beschichtungsmittels aufweisen.

Bei den Farbpigmenten kann es sich um Chromoxidgrün handeln, um lediglich ein Beispiel zu nennen.

Als Verdünnungsmittel kann beispielsweise Firnis und/oder Terpentinöl eingesetzt werden.

Bei den Füllstoffen oder Additiven kann es sich beispielsweise um Talkum, Kreide, Kieselsäure, Quellton, Eisenglimmer oder Cellulose handeln.

Das Beschichtungsmittel kann als weiteren Bestandteil auch Lösemittel umfassen. Als Lösemittel kommen beispielsweise sowohl organische Lösemittel, wie etwa Aliphate, Aromate, Ester, Ketone oder Alkohol, als auch Wasser in Betracht. Das Lösemittel kann in einem ausgehärteten Zustand des Lacks ganz oder teilweise verflogen sein.

Eine weitere Ausgestaltung der Erfindung zeichnet sich dadurch aus, dass die Beschichtung mehrschichtig aufgebaut ist und ausgehend von der Oberfläche des Bauteils der Reihe nach die folgenden aufeinanderliegenden Schichten umfasst:
a) eine Leinölschicht oder mehrere Leinölschichten;
b) eine Leinölfirnschicht oder mehrere Leinölfirnschichten; und
c) eine Öllackschicht oder mehrere Öllackschichten;
wobei wenigstens eine, insbesondere mehrere und bevorzugt jede der vorgenannten Schichten ein Düngemittel und/oder einen Bodenhilfsstoff und/oder einen Bodenverbesserungsstoff umfasst/umfassen und optional wenigstens eine, insbesondere mehrere und bevorzugt jede der vorgenannten Schichten Korrosionsschutzmittel, bevorzugt Eisenglimmer und/oder Eisenmennige und/oder Graphit, umfasst/umfassen.

Noch eine weitere Ausgestaltung der Erfindung zeichnet sich dadurch aus, dass die Beschichtung mehrschichtig aufgebaut ist und ausgehend von der Oberfläche des Bauteils der Reihe nach die folgenden aufeinanderliegenden Schichten umfasst:
a) eine magere Rostschutzfarbschicht oder mehrere, insbesondere zwei magere Rostschutzfarbschichten;
b) optional eine nicht-magere Rostschutzfarbschicht oder mehrere nicht-magere Rostschutzfarbschichten; und
c) eine Leinölfarbschicht oder mehrere Leinölfarbschichten oder eine Öllackschicht oder mehrere Öllackschichten, bevorzugt drei oder vier Öllackschichten;
wobei wenigstens eine, insbesondere mehrere und bevorzugt jede der vorgenannten Schichten ein Düngemittel und/oder einen Bodenhilfsstoff und/oder einen Bodenverbesserungsstoff umfasst/umfassen und optional wenigstens eine, insbesondere mehrere und bevorzugt jede der vorgenannten Schichten Korrosionsschutzmittel, bevorzugt Eisenglimmer und/oder Eisenmennige und/oder Graphit, umfasst/umfassen.

Unter einer mageren Rostschutzfarbschicht ist eine Schicht aus einer mageren Rostschutzfarbe, also einer Rostschutzfarbe mit einem verglichen mit einer nicht-mageren Rostschutzfarbe geringen Ölanteil, zu verstehen. Entsprechend ist unter einer nicht-mageren Rostschutzfarbschicht eine Schicht aus einer nicht-mageren Rostschutzfarbe, also einer Rostschutzfarbe mit einem verglichen mit einer mageren Rostschutzfarbe hohen Ölanteil, zu verstehen.

Bodenbearbeitungswerkzeuge können beispielsweise Schare, insbesondere Schnabelschare, Schmalschare, Untergrundlockererschare, Meißelschare, Wechselspitzenschare, Doppelherzschare, Gänsefußschare, Flügelschare, Schar-Vorderteile, Schar-Hinterteile, Scharseche, Rübenroderschare, Unterschare, Oberschare, Säschare, Spatenschare und/oder Düngereinlegerschare, Scharspitzen, Scharmesser, Wechselspitzen, Meißel, Grubber, Zinken, insbesondere Kreiseleggenzinken, Heber, Scheiben, insbesondere Hohlscheiben, Sechscheiben und/oder Spatenscheiben, Schneiden, Messer, insbesondere Schlegelmesser, und/oder Gleitkufen sowie Streichbleche, Düngereinlegerstreichbleche, Streichblech-Vorder-, Streichblech-Hinterteile und/oder Streichblech-Streifen sowie Stiele, insbesondere Düngereinlegestiele und/oder Grubberstiele, Anlagen, Anlagenschoner und/oder Anlagenseche, Leitbleche, Randleitbleche, Rumpfanschläge, Abstreifer, Rollhacksterne und/oder Verschleißplatten sein oder solche Komponenten umfassen. Bodenbearbeitungswerkzeuge können auch Komponenten für Mähwerke oder Häcksler, wie etwa Fräshaken, Ährenheber, Messer, Klingen, Schneiden und Scheiben, insbesondere Mähscheiben, und/oder Haltefedern sein oder solche Komponenten umfassen. Werkzeuge zur Gartengestaltung sind beispielsweise das Blatt eines Spatens oder einer Hacke, die Zinken eines Rechens oder das Messer eines Vertikutierers.

Ein weiterer Gegenstand der Erfindung ist eine Land- und/oder Gartenmaschine, insbesondere Bodenbearbeitungs- und/oder Grünlandmaschine, bevorzugt Pflug oder Grubber oder Egge oder Fräser oder Mähdrescher oder Mähmaschine oder Häcksler oder Mulcher oder Ernte- oder Dünge- oder Sämaschine, umfassend wenigstens ein erfindungsgemäßes Bauteil.

Noch ein weiterer Gegenstand der Erfindung ist eine Verwendung eines insbesondere kunststofffreien Beschichtungsmittels, vorzugsweise auf Ölbasis, bevorzugt Leinölbasis, das ein Düngemittel und/oder einen Bodenhilfsstoff und/oder einen Bodenverbesserungsstoff umfasst, zur Beschichtung zumindest eines Abschnitts der Oberfläche eines Bauteils für die Montage an einer Land- und/oder Gartenmaschine, insbesondere eines Werkzeugs oder einer Komponente einer Werkzeuganordnung zur Bodenbearbeitung und/oder Grünlandbearbeitung und/oder Ernte und/oder Gartengestaltung, insbesondere eines erfindungsgemäßen Bauteils.

Außerdem ist ein weiterer Gegenstand der Erfindung ein Beschichtungsmittel, insbesondere kunststofffreies Beschichtungsmittel, vorzugsweise auf Ölbasis, bevorzugt Leinölbasis, das ein Düngemittel und/oder einen Bodenhilfsstoff und/oder einen Bodenverbesserungsstoff umfasst, wobei der Gesamtgehalt an Düngemittel und/oder Bodenhilfsstoff und/oder Bodenverbesserungsstoff bezogen auf die Gesamtmenge des Beschichtungsmittels mindestens 5 Gew.%, bevorzugt mindestens 8 Gew.%, vorzugsweise mindestens 10 Gew.%, besonders bevorzugt mindestens 20 Gew.%, insbesondere mindestens 30 Gew.%, mindestens 40 Gew.% oder mindestens 50 Gew.% beträgt. Das erfindungsgemäße Beschichtungsmittel kann insbesondere zur Beschichtung zumindest eines Abschnitts der Oberfläche eines Bauteils für die Montage an einer Land- und/oder Gartenmaschine, insbesondere eines Werkzeugs oder einer Komponente einer Werkzeuganordnung zur Bodenbearbeitung und/oder Grünlandbearbeitung und/oder Ernte und/oder Gartengestaltung verwendet werden.

Schließlich ist ein Gegenstand der Erfindung ein Verfahren zur Herstellung eines mit einer Beschichtung versehenen erfindungsgemäßen Bauteils, bei dem eine insbesondere kunststofffreie Beschichtung vorzugsweise Schicht für Schicht auf zumindest einen Abschnitt der Oberfläche des Bauteils aufgebracht wird, wobei zur Bildung zumindest einer Schicht der Beschichtung ein insbesondere kunststofffreies Beschichtungsmittel, vorzugsweise auf Ölbasis, bevorzugt Leinölbasis, das ein Düngemittel und/oder einen Bodenhilfsstoff und/oder einen Bodenverbesserungsstoff umfasst, insbesondere ein erfindungsgemäßes Beschichtungsmittel, aufgetragen wird.

Vorzugsweise wird die Oberfläche des Bauteils vor dem Aufbringen der zumindest einen Schicht insbesondere mittels einer Drahtbürste und/oder eines Rostumwandlers und/oder eines Rostentferners und/oder mittels Sandstrahlen gereinigt. Dies ist insbesondere sinnvoll, wenn das Bauteil aus Metall oder einer Metalllegierung, vorzugsweise Stahl, besteht.

Eine mehrschichtige Beschichtung kann erzeugt werden, indem
a) das Bauteil erhitzt wird;
b) Leinöl unmittelbar auf das erhitzte Bauteil aufgebracht wird;
c) Leinölfirn, insbesondere Leinölfarbe, auf das Leinöl aufgebracht wird; und
d) Öllack, insbesondere Tonkinlack, auf das Leinölfirn aufgebracht wird;
wobei dem Leinöl und/oder dem Leinölfirn und/oder dem Öllack vor dem Aufbringen ein Düngemittel und/oder ein Bodenhilfsstoff und/oder ein Bodenverbesserungsstoff beigemengt wird, insbesondere darin eingerührt und/oder eingerieben wird, und optional dem Leinöl und/oder dem Leinölfirn und/oder dem Öllack vor dem Aufbringen Korrosionsschutzmittel, bevorzugt Eisenglimmer und/oder Eisenmennige und/oder Graphit, beigemengt wird, insbesondere darin eingerührt und/oder eingerieben wird.

Hierbei können das Leinöl und/oder der Leinölfirn und/oder der Öllack in mehreren Schichten aufgebracht werden.

Eine mehrschichtige Beschichtung kann auch erzeugt werden, indem
a) die Oberfläche des Bauteils mit einer mageren Rostschutzfarbe angestrichen wird;
b) die magere Rostschutzfarbe optional mit einer nicht-mageren Rostschutzfarbe überstrichen wird; und
c) Leinölfarbe auf die magere Rostschutzfarbe oder auf die nicht-magere Rostschutzfarbe, falls vorhanden, aufgebracht wird; oder Öllack auf die magere Rostschutzfarbe oder auf die nicht-magere Rostschutzfarbe, falls vorhanden, aufgebracht wird;
wobei der mageren Rostschutzfarbe vor dem Aufstreichen und/oder der nicht-mageren Rostschutzfarbe vor dem Aufstreichen und/oder der Leinölfarbe vor dem Aufbringen und/oder dem Öllack vor dem Aufbringen ein Düngemittel und/oder ein Bodenhilfsstoff und/oder ein Boden-verbesserungsstoff beigemengt wird, insbesondere darin eingerührt und/oder eingerieben wird, und optional der Leinölfarbe oder dem Öllack vor dem Aufbringen Korrosionsschutzmittel, bevorzugt Eisenglimmer und/oder Eisenmennige und/oder Graphit, beigemengt wird, insbesondere darin eingerührt und/oder eingerieben wird.

In Schritt a) kann die Oberfläche des Bauteils mehrmals, bevorzugt zweimal mit der mageren Rostschutzfarbe angestrichen werden, sodass mehrere, bevorzugt zwei magere Rostschutzfarbschichten erzeugt werden. Alternativ oder zusätzlich kann in Schritt b) die magere Rostschutzfarbe mit der nicht-mageren Rostschutzfarbe mehrmals überstrichen werden, sodass mehrere nicht-magere Rostschutzfarbschichten erzeugt werden. Alternativ oder zusätzlich kann in Schritt c) die Leinölfarbe in mehreren Schichten auf die magere Rostschutzfarbe oder auf die nicht-magere Rostschutzfarbe aufgebracht werden; oder der Öllack in mehreren Schichten, bevorzugt in drei oder vier Schichten, auf die magere Rostschutzfarbe oder auf die nicht-magere Rostschutzfarbe aufgebracht werden.

Zweckmäßigerweise erfolgt das insbesondere schichtweise Aufbringen der Beschichtung auf die Oberfläche des Bauteils durch Eintauchen des insbesondere vorher erhitzten Bauteils in das entsprechende Beschichtungsmittel und/oder durch Bestreichen des Bauteils und/oder durch Besprühen des Bauteils. Das Verfahren, bei dem ein erhitztes Bauteil aus Metall oder einer Metalllegierung in Öl, insbesondere Leinöl, getaucht wird, bezeichnet man auch als Brünieren.

Weitere Merkmale und Vorteile der vorliegenden Erfindung werden anhand der nachfolgenden Beschreibung von neun Ausführungsformen eines erfindungsgemäßen Bauteils unter Bezugnahme auf die beiliegende Zeichnung deutlich. Darin ist:
- Figur 1: eine schematische Ansicht eines Bauteils gemäß einer ersten Ausführungsform der vorliegenden Erfindung;
- Figur 2: eine schematische Ansicht eines Bauteils gemäß einer zweiten Ausführungsform der vorliegenden Erfindung;
- Figur 3: eine schematische Ansicht eines Bauteils gemäß einer dritten Ausführungsform der vorliegenden Erfindung;
- Figur 4: eine schematische Ansicht eines Bauteils gemäß einer vierten Ausführungsform der vorliegenden Erfindung;
- Figur 5: eine schematische Ansicht eines Bauteils gemäß einer fünften Ausführungsform der vorliegenden Erfindung;
- Figur 6: eine schematische Ansicht eines Bauteils gemäß einer sechsten Ausführungsform der vorliegenden Erfindung;
- Figur 7: eine schematische Ansicht eines Bauteils gemäß einer siebten Ausführungsform der vorliegenden Erfindung;
- Figur 8: eine schematische Ansicht eines Bauteils gemäß einer achten Ausführungsform der vorliegenden Erfindung;
- Figur 9: eine schematische Ansicht eines Bauteils gemäß einer neunten Ausführungsform der vorliegenden Erfindung; und
- Figur 10: eine von einem Traktor gezogene Landmaschine, die mit einer Mehrzahl von den in Figur 1 dargestellten Bauteilen ausgestattet ist.

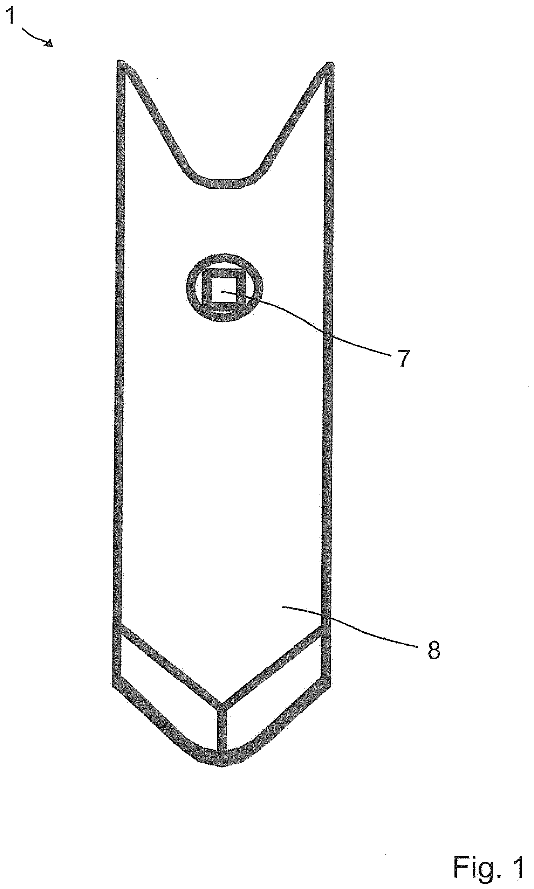

Die Figuren 1 bis 9 zeigen insgesamt neun verschiedene Ausführungsformen eines erfindungsgemäßen Bauteils 1.

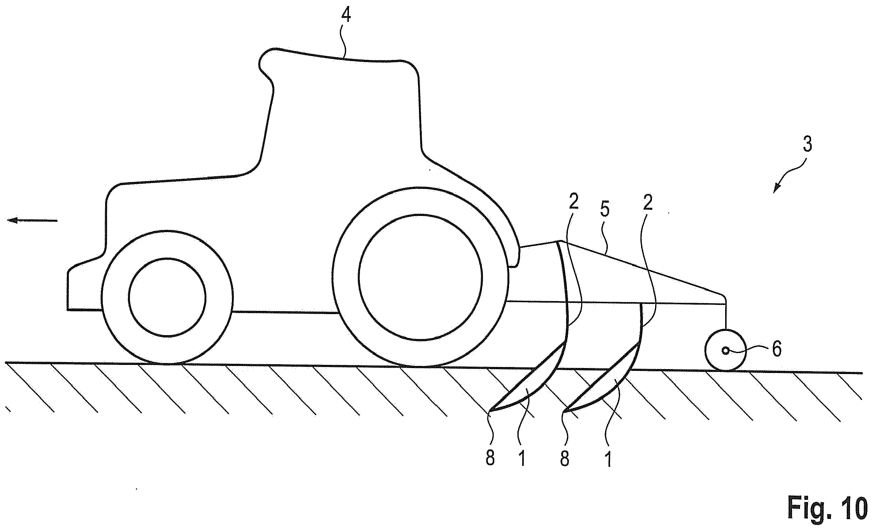

In der Figur 1 ist eine erste Ausführungsform eines erfindungsgemäßen Bauteils 1 dargestellt, welches als Scharspitze ausgebildet ist, die insbesondere an einem Zinken bzw. Stiel 2 einer nur in der Figur 10 dargestellten Landmaschine 3, genauer gesagt einer landwirtschaftlichen Bodenbearbeitungsmaschine, die von einer Zugmaschine 4, bei dem dargestellten Ausführungsbeispiel einem Traktor, gezogen wird, befestigt werden kann. Die Zugrichtung ist in Figur 10 mit einem Pfeil angedeutet. Die Landmaschine 3 umfasst einen Grundrahmen 5, an welchem die die Scharspitzen tragenden Stiele 2 befestigt sind, und ein Stützrad 6. Es sei angemerkt, dass es natürlich auch möglich ist, dass eine erfindungsgemäße Landmaschine 3 alternativ zu dem dargestellten Ausführungsbeispiel einen eigenen Antrieb aufweisen kann.

Für die Fixierung ist in der Scharspitze in an sich bekannter Weise ein Durchgangsloch 7 vorgesehen, durch welches sich im bestimmungsgemäß montierten Zustand eine nicht dargestellte Schraube erstreckt, die in eine korrespondierende, an dem entsprechenden Stiel 2 vorgesehene, in der rein schematischen Figur 10 nicht erkennbare Gewindebohrung eingeschraubt ist.

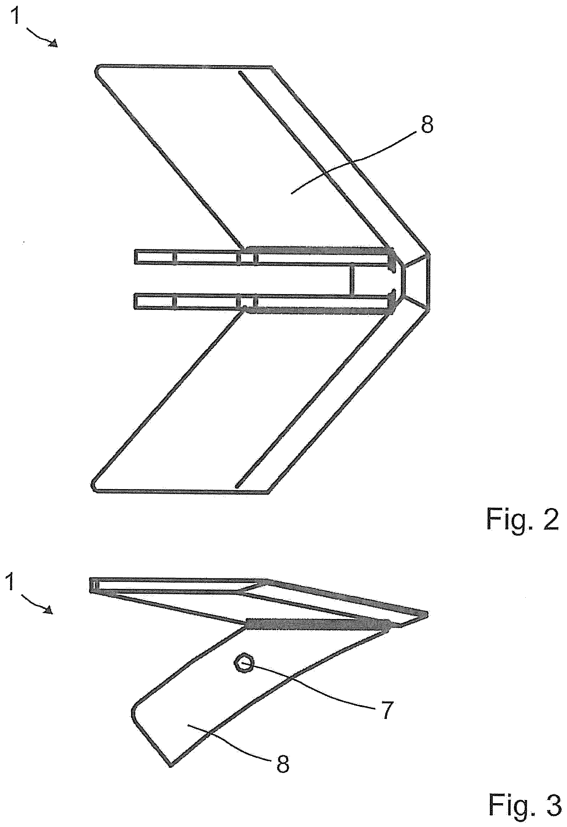

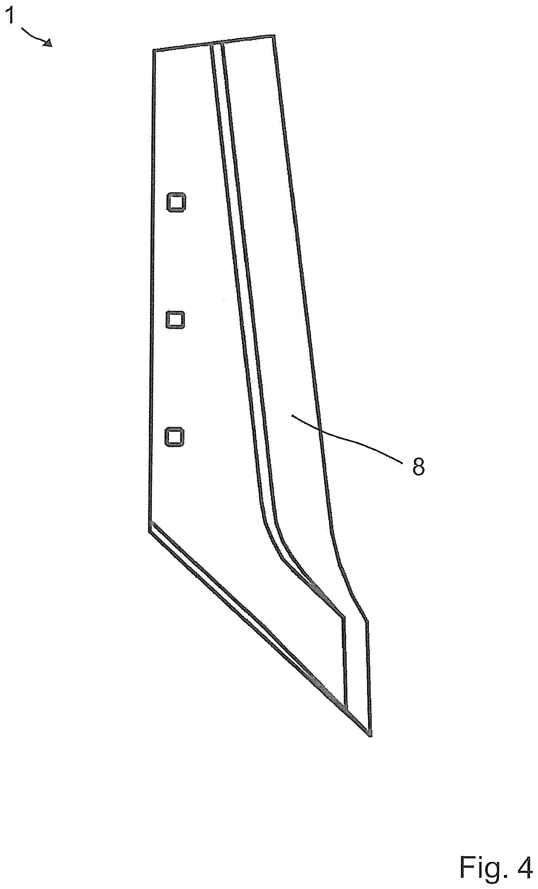

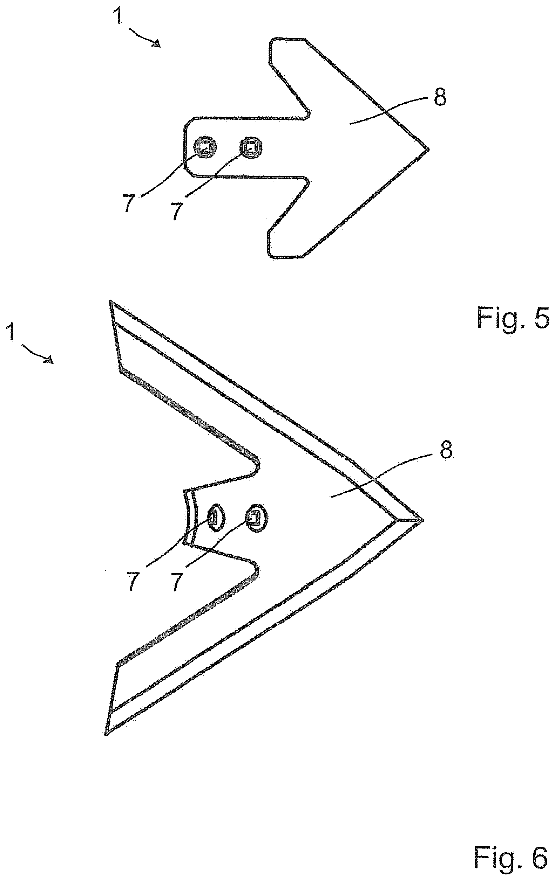

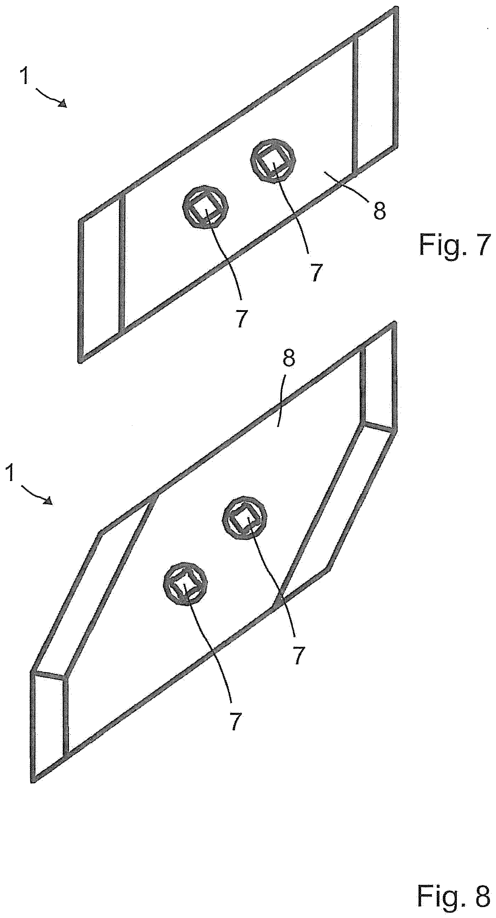

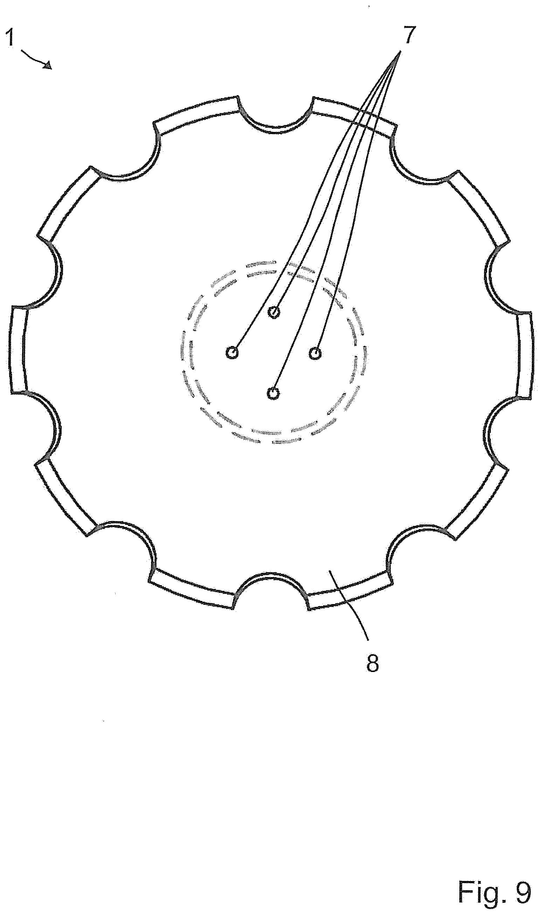

In der Figur 2 ist eine zweite Ausführungsform eines erfindungsgemäßen Bauteils 1 dargestellt, welches als Flügelschar ausgebildet ist. In der Figur 3 ist eine dritte Ausführungsform eines erfindungsgemäßen Bauteils 1 dargestellt, welches ebenfalls als Flügelschar ausgebildet ist. In der Figur 4 ist eine vierte Ausführungsform eines erfindungsgemäßen Bauteils 1 dargestellt, welches als Schnabelschar ausgebildet ist. In der Figur 5 ist eine fünfte Ausführungsform eines erfindungsgemäßen Bauteils 1 dargestellt, welches als Gänsefußschar ausgebildet ist. In der Figur 6 ist eine sechste Ausführungsform eines erfindungsgemäßen Bauteils 1 dargestellt, welches ebenfalls als Gänsefußschar ausgebildet ist. In der Figur 7 ist eine siebte Ausführungsform eines erfindungsgemäßen Bauteils 1 dargestellt, welches als Wechselspitze ausgebildet ist. In der Figur 8 ist eine achte Ausführungsform eines erfindungsgemäßen Bauteils 1 dargestellt, welches ebenfalls als Wechselspitze ausgebildet ist. Schließlich ist in Figur 9 eine neunte Ausführungsform eines erfindungsgemäßen Bauteils 1 dargestellt, welches als Hohlscheibe ausgebildet ist.

Die erfindungsgemäßen Bauteile 1 gemäß der zweiten, dritten, vierten, fünften, sechsten, siebten, achten und neunten Ausführungsform können auf ähnliche Weise wie im Zusammenhang mit der Scharspitze beschrieben beispielsweise an dem Stiel 2 der in der Figur 10 dargestellten Landmaschine 3 befestigt werden.

Das Bauteil 1 gemäß jeder der hier beschriebenen neun Ausführungsformen besteht zumindest im Wesentlichen aus Stahl. Die Oberfläche des Bauteils 1 gemäß jeder der hier beschriebenen neun Ausführungsformen ist vorliegend vollständig mit einer Beschichtung 8 versehen, die vorliegend aus einer einzigen Schicht aus einem kunststofffreien Beschichtungsmittel mit einer Schichtdicke von 60 µm besteht. Grundsätzlich ist es jedoch möglich, dass die Oberfläche des Bauteils 1 nur abschnittweise mit der Beschichtung 8 versehen ist. Das Beschichtungsmittel enthält vorliegend 25 Gew.% Basaltmehl als Düngemittel und/oder Bodenhilfsstoff und/oder Bodenverbesserungsstoff, 4 Gew.% Sikkativ und 71 Gew.% kaltgepresstes, geklärtes und gekochtes Leinöl. Das in dem Beschichtungsmittel und somit in der Beschichtung 8 enthaltene Leinöl weist bereits eine gewisse korrosionshemmende Wirkung auf. Grundsätzlich ist es jedoch in einer anderen Ausführungsform möglich, dass das Beschichtungsmittel und somit die Beschichtung 8 als weiteren Bestandteil Korrosionsschutzmittel, bevorzugt Eisenglimmer und/oder Eisenmennige und/oder Graphit, enthält. Auch noch weitere Bestandteile, wie beispielsweise Bindemittel, Dispergiermittel, Verdünnungsmittel, Füllstoffe oder Farbpigmente, sind denkbar. Bei Beimengung solcher weiterer Bestandteile in das Beschichtungsmittel kann beispielsweise der Leinölanteil bei gleichbleibendem Gehalt an Basaltmehl und Sikkativ entsprechend verringert werden.

Es versteht sich, dass es sich in andere Ausführungsformen auch um eine mehrschichtige Beschichtung 8 handeln kann, wobei insbesondere unterschiedliche Schichten aus unterschiedlichen und/oder identischen Beschichtungsmitteln gebildet sein können. Auch ist die oben angegebene Schichtdicke lediglich beispielhaft zu verstehen. Außerdem sollte klar sein, dass die Zusammensetzung des Beschichtungsmittels nur beispielhaft ist.

Bei der Herstellung des Bauteils 1 gemäß jeder der hier beschriebenen neun Ausführungsformen wird zunächst die Oberfläche des Bauteils 1 mittels einer Drahtbürste und/oder eines Rostumwandlers und/oder eines Rostentferners und/oder mittels Sandstrahlen gereinigt. Anschließend wird das oben beschriebene Beschichtungsmittel auf die Oberfläche des Bauteils 1 aufgebracht beziehungsweise aufgetragen. Hierzu wird das Bauteil 1 beispielsweise in das Beschichtungsmittel eingetaucht, mit dem Beschichtungsmittel bestrichen oder mit dem Beschichtungsmittel besprüht.

### Bezugszeichenliste

- 1: Bauteil
- 2: Stiel
- 3: Landmaschine
- 4: Zugmaschine
- 5: Grundrahmen
- 6: Stützrad
- 7: Durchgangsloch
- 8: Beschichtung

## Patentansprüche

1. Bauteil (1) für die Montage an einer Land- und/oder Gartenmaschine (3), insbesondere Werkzeug oder Komponente einer Werkzeuganordnung zur Bodenbearbeitung und/oder Grünlandbearbeitung und/oder Ernte und/oder Gartengestaltung, wobei die Oberfläche des Bauteils (1) zumindest abschnittsweise mit einer Beschichtung (8) versehen ist, **dadurch gekennzeichnet, dass** die Beschichtung (8) zumindest eine Schicht aus einem insbesondere kunststofffreien Beschichtungsmittel aufweist, das ein Düngemittel und/oder einen Bodenhilfsstoff und/oder einen Bodenverbesserungsstoff umfasst.

2. Bauteil (1) nach Anspruch 1, **dadurch gekennzeichnet, dass** das Düngemittel und/oder der Bodenhilfsstoff und/oder der Bodenverbesserungsstoff ein Mehl zumindest einer Gesteinsart umfasst, wobei es sich bei der Gesteinsart insbesondere um Basalt, Diabas, Quarz, Zeolith, Granit, Bentonit und/oder vulkanisches oder magmatisches Gestein handelt, und/oder dass das Düngemittel einen mineralischen Dünger, insbesondere einen mineralischen Einnährstoffdünger oder einen mineralischen Mehrnährstoffdünger, und/oder einen organischen Dünger und/oder einen organisch-mineralischen Dünger umfasst.

3. Bauteil (1) nach einem der Ansprüche 1 oder 2, **dadurch gekennzeichnet, dass** der Gesamtgehalt an Düngemittel und/oder Bodenhilfsstoff und/oder Bodenverbesserungsstoff bezogen auf die Gesamtmenge des Beschichtungsmittels der zumindest einen Schicht maximal 80 Gew.%, bevorzugt maximal 70 Gew.%, besonders bevorzugt maximal 60 Gew.% beträgt, insbesondere zwischen 5 und 50 Gew.%, bevorzugt zwischen 10 und 40 Gew.%, besonders bevorzugt zwischen 10 und 30 Gew.% liegt, und/oder dass der Gesamtgehalt an Düngemittel und/oder Bodenhilfsstoff und/oder Bodenverbesserungsstoff bezogen auf die Gesamtmenge des Beschichtungsmittels der zumindest einen Schicht mindestens 5 Gew.%, bevorzugt mindestens 8 Gew.%, vorzugsweise mindestens 10 Gew.%, besonders bevorzugt mindestens 20 Gew.%, insbesondere mindestens 30 Gew.%, mindestens 40 Gew.% oder mindestens 50 Gew.% beträgt.

4. Bauteil (1) nach einem der vorhergehenden Ansprüche, **dadurch gekennzeichnet, dass** die Schichtdicke einer Schicht der Beschichtung (8), insbesondere jeder Schicht der Beschichtung (8), mindestens 20 µm, bevorzugt mindestens 30 µm, besonders bevorzugt mindestens 50 µm, ganz besonders bevorzugt mindestens 60 µm beträgt, insbesondere zwischen 60 µm und 100 µm liegt, vorzugsweise 60 µm, 80 µm oder 100 µm beträgt, und/oder dass das Beschichtungsmittel ein Beschichtungsmittel auf Ölbasis, vorzugsweise Leinölbasis, ist und insbesondere reines Leinöl und/oder gekochtes Leinöl und/oder rohes Leinöl und/oder kaltgepresstes Leinöl und/oder geklärtes Leinöl und/oder entschleimtes Leinöl und/oder sterilisiertes Leinöl und/oder Leinölfirnis und/oder einen Öllack, insbesondere Tonkinlack, umfasst.

5. Bauteil (1) nach einem der vorhergehenden Ansprüche, **dadurch gekennzeichnet, dass** das Beschichtungsmittel als weiteren Bestandteil Korrosionsschutzmittel, bevorzugt Eisenglimmer und/oder Eisenmennige und/oder Graphit, und/oder Dispergiermittel und/oder Verdünnungsmittel und/oder einen Trockenstoff und/oder Bindemittel und/oder Farbpigmente und/oder einen Füllstoff oder Additive umfasst.

6. Bauteil (1) nach einem der vorhergehenden Ansprüche, **dadurch gekennzeichnet, dass** die Beschichtung (8) mehrschichtig aufgebaut ist und ausgehend von der Oberfläche des Bauteils (1) der Reihe nach die folgenden aufeinanderliegenden Schichten umfasst:
a) eine Leinölschicht oder mehrere Leinölschichten;
b) eine Leinölfirnschicht oder mehrere Leinölfirnschichten; und
c) eine Öllackschicht oder mehrere Öllackschichten;
wobei wenigstens eine, insbesondere mehrere und bevorzugt jede der vorgenannten Schichten ein Düngemittel und/oder einen Bodenhilfsstoff und/oder einen Bodenverbesserungsstoff umfasst/umfassen und optional wenigstens eine, insbesondere mehrere und bevorzugt jede der vorgenannten Schichten Korrosionsschutzmittel, bevorzugt Eisenglimmer und/oder Eisenmennige und/oder Graphit, umfasst/umfassen.

7. Bauteil (1) nach einem der Ansprüche 1 bis 5, **dadurch gekennzeichnet, dass** die Beschichtung (8) mehrschichtig aufgebaut ist und ausgehend von der Oberfläche des Bauteils (1) der Reihe nach die folgenden aufeinanderliegenden Schichten umfasst:
a) eine magere Rostschutzfarbschicht oder mehrere, insbesondere zwei magere Rostschutzfarbschichten;
b) optional eine nicht-magere Rostschutzfarbschicht oder mehrere nicht-magere Rostschutzfarbschichten; und
c) eine Leinölfarbschicht oder mehrere Leinölfarbschichten oder eine Öllackschicht oder mehrere Öllackschichten, bevorzugt drei oder vier Öllackschichten;
wobei wenigstens eine, insbesondere mehrere und bevorzugt jede der vorgenannten Schichten ein Düngemittel und/oder einen Bodenhilfsstoff und/oder einen Bodenverbesserungsstoff umfasst/umfassen und optional wenigstens eine, insbesondere mehrere und bevorzugt jede der vorgenannten Schichten Korrosionsschutzmittel, bevorzugt Eisenglimmer und/oder Eisenmennige und/oder Graphit, umfasst/umfassen.

8. Land- und/oder Gartenmaschine (3), insbesondere Bodenbearbeitungs- und/oder Grünlandmaschine, bevorzugt Pflug oder Grubber oder Egge oder Fräser oder Mähdrescher oder Mähmaschine oder Häcksler oder Mulcher oder Ernte- oder Dünge- oder Sämaschine, umfassend wenigstens ein Bauteil (1) nach einem der vorhergehenden Ansprüche.

9. Verwendung eines insbesondere kunststofffreien Beschichtungsmittels, vorzugsweise auf Ölbasis, bevorzugt Leinölbasis, das ein Düngemittel und/oder einen Bodenhilfsstoff und/oder einen Bodenverbesserungsstoff umfasst, zur Beschichtung zumindest eines Abschnitts der Oberfläche eines Bauteils (1) für die Montage an einer Land- und/oder Gartenmaschine (3), insbesondere eines Werkzeugs oder einer Komponente einer Werkzeuganordnung zur Bodenbearbeitung und/oder Grünlandbearbeitung und/oder Ernte und/oder Gartengestaltung, insbesondere nach einem der Ansprüche 1 bis 7.

10. Beschichtungsmittel, insbesondere kunststofffreies Beschichtungsmittel, vorzugsweise auf Ölbasis, bevorzugt Leinölbasis, das ein Düngemittel und/oder einen Bodenhilfsstoff und/oder einen Bodenverbesserungsstoff umfasst, wobei der Gesamtgehalt an Düngemittel und/oder Bodenhilfsstoff und/oder Bodenverbesserungsstoff bezogen auf die Gesamtmenge des Beschichtungsmittels mindestens 5 Gew.%, bevorzugt mindestens 8 Gew.%, vorzugsweise mindestens 10 Gew.%, besonders bevorzugt mindestens 20 Gew.%, insbesondere mindestens 30 Gew.%, mindestens 40 Gew.% oder mindestens 50 Gew.% beträgt.

11. Verfahren zur Herstellung eines mit einer Beschichtung (8) versehenen Bauteils (1) nach einem der Ansprüche 1 bis 7, bei dem eine insbesondere kunststofffreie Beschichtung (8) vorzugsweise Schicht für Schicht auf zumindest einen Abschnitt der Oberfläche des Bauteils (1) aufgebracht wird, wobei zur Bildung zumindest einer Schicht der Beschichtung (8) ein insbesondere kunststofffreies Beschichtungsmittel, vorzugsweise auf Ölbasis, bevorzugt Leinölbasis, das ein Düngemittel und/oder einen Bodenhilfsstoff und/oder einen Bodenverbesserungsstoff umfasst, insbesondere ein Beschichtungsmittel nach Anspruch 10, aufgetragen wird.

12. Verfahren nach Anspruch 11, **dadurch gekennzeichnet, dass** das Bauteil (1) aus Metall oder einer Metalllegierung, vorzugsweise Stahl, besteht und vorzugsweise die Oberfläche des Bauteils (1) vor dem Aufbringen der zumindest einen Schicht insbesondere mittels einer Drahtbürste und/oder eines Rostumwandlers und/oder eines Rostentferners und/oder mittels Sandstrahlen gereinigt wird.

13. Verfahren nach Anspruch 12, **dadurch gekennzeichnet, dass** eine mehrschichtige Beschichtung (8) erzeugt wird, indem
a) das Bauteil (1) erhitzt wird;
b) Leinöl unmittelbar auf das erhitzte Bauteil (1) aufgebracht wird, bevorzugt in mehreren Schichten;
c) Leinölfirn, insbesondere Leinölfarbe, auf das Leinöl aufgebracht wird, bevorzugt in mehreren Schichten; und
d) Öllack, insbesondere Tonkinlack, auf das Leinölfirn aufgebracht wird, bevorzugt in mehreren Schichten;
wobei dem Leinöl und/oder dem Leinölfirn und/oder dem Öllack vor dem Aufbringen ein Düngemittel und/oder ein Bodenhilfsstoff und/oder ein Bodenverbesserungsstoff beigemengt wird, insbesondere darin eingerührt und/oder eingerieben wird, und optional dem Leinöl und/oder dem Leinölfirn und/oder dem Öllack vor dem Aufbringen Korrosionsschutzmittel, bevorzugt Eisenglimmer und/oder Eisenmennige und/oder Graphit, beigemengt wird, insbesondere darin eingerührt und/oder eingerieben wird.

14. Verfahren nach Anspruch 12, **dadurch gekennzeichnet, dass** eine mehrschichtige Beschichtung (8) erzeugt wird, indem
a) die Oberfläche des Bauteils (1) mit einer mageren Rostschutzfarbe angestrichen wird;
b) die magere Rostschutzfarbe optional mit einer nicht-mageren Rostschutzfarbe überstrichen wird; und
c) Leinölfarbe auf die magere Rostschutzfarbe oder auf die nicht-magere Rostschutzfarbe, falls vorhanden, aufgebracht wird; oder Öllack auf die magere Rostschutzfarbe oder auf die nicht-magere Rostschutzfarbe, falls vorhanden, aufgebracht wird;
wobei der mageren Rostschutzfarbe vor dem Aufstreichen und/oder der nicht-mageren Rostschutzfarbe vor dem Aufstreichen und/oder der Leinölfarbe vor dem Aufbringen und/oder dem Öllack vor dem Aufbringen ein Düngemittel und/oder ein Bodenhilfsstoff und/oder ein Boden-verbesserungsstoff beigemengt wird, insbesondere darin eingerührt und/oder eingerieben wird, und optional der Leinölfarbe oder dem Öllack vor dem Aufbringen Korrosionsschutzmittel, bevorzugt Eisenglimmer und/oder Eisenmennige und/oder Graphit, beigemengt wird, insbesondere darin eingerührt und/oder eingerieben wird, bevorzugt, wobei
- in Schritt a) die Oberfläche des Bauteils (1) mehrmals, bevorzugt zweimal mit der mageren Rostschutzfarbe angestrichen wird, sodass mehrere, bevorzugt zwei magere Rostschutzfarbschichten erzeugt werden; und/oder
- in Schritt b) die magere Rostschutzfarbe mit der nicht-mageren Rostschutzfarbe mehrmals überstrichen wird, sodass mehrere nicht-magere Rostschutzfarbschichten erzeugt werden; und/oder
- in Schritt c) die Leinölfarbe in mehreren Schichten auf die magere Rostschutzfarbe oder auf die nicht-magere Rostschutzfarbe aufgebracht wird; oder der Öllack in mehreren Schichten, bevorzugt in drei oder vier Schichten, auf die magere Rostschutzfarbe oder auf die nicht-magere Rostschutzfarbe aufgebracht wird.

15. Verfahren nach einem der Ansprüche 11 bis 14, **dadurch gekennzeichnet, dass** das insbesondere schichtweise Aufbringen der Beschichtung (8) auf die Oberfläche des Bauteils (1) durch Eintauchen des insbesondere vorher erhitzten Bauteils (1) in das entsprechende Beschichtungsmittel und/oder durch Bestreichen des Bauteils (1) und/oder durch Besprühen des Bauteils (1) erfolgt.
